# EUROPÄISCHE PATENTSCHRIFT

(11) **EP 1 220 759 B1**
(45) Veröffentlichungstag und Bekanntmachung des Hinweises auf die Patenterteilung: **21.03.2007**
(21) Anmeldenummer: 01911363.8
(22) Anmeldetag: 18.01.2001
(51) Int. Cl.: B60J 10/00

(54) **MONTAGEVORRICHTUNG**
MOUNTING DEVICE
DISPOSITIF DE MONTAGE

(30) Priorität: 24.01.2000 DE 10002988
(43) Veröffentlichungstag der Anmeldung: 10.07.2002
(73) Patentinhaber: Böhle, Hartmut, 82393 Iffeldorf (DE)
(72) Erfinder: Böhle, Hartmut, 82393 Iffeldorf (DE)
(74) Vertreter: Flosdorff, Jürgen
(86) Internationale Anmeldenummer: PCT/DE2001/000193
(87) Internationale Veröffentlichungsnummer: WO 2001/053123

(56) Entgegenhaltungen:
- EP-A- 0 152 123
- DE-A- 4 243 989
- DE-C- 4 411 431
- DE-C- 19 704 327
- FR-A- 2 781 404

## Beschreibung

Die Erfindung betrifft eine Montagevorrichtung für einen an dem Türrahmen einer Fahrzeugtür zu befestigenden Dichtungsstreifen. Bei diesem Dichtungsstreifen handelt es sich vorzugsweise um eine Zusatzdichtung, die in dem vorderen, nach oben ansteigenden Bereich des Fensterrahmens der Fahrzeugtür angebracht wird.

Um sicherzustellen, daß der von Hand angebrachte Dichtungsstreifen exakt an der vorgesehenen Stelle sitzt, wird zuvor eine Formschablone an dem Fensterrahmen der Fahrzeugtür angeklemmt, die eine vorstehende Randkante hat, die die einzunehmende Position des Dichtungsstreifens an dem Fensterrahmen definiert.

Der Dichtungsstreifen enthält einen Trockenkleber, dessen Schutzfolie vor dem Andrücken des Dichtungsstreifens an den Fensterrahmen der Fahrzeugtür abgezogen wird. Damit der Dichtungsstreifen sicher an der Karosserie klebt, muß er mit einer vorbestimmten Kraft an diese angedrückt werden, wozu eine handgeführte Anrolleinrichtung geeignet ist.

DE 44 11 431 C offenbart eine Montagevorrichtung gemäß dem Oberbegriff des Patentanspruchs 1. Bei dieser Montagevorrichtung wird ein streifenförmiger Dichtungskörper mit Hilfe einer Rolle in die obere Aufnahmerinne einer Türblende eingeklipst, wobei der Außenumfang der Rolle auf die Kontur des Dichtungsfußes abgestimmt ist, um das Einklipsen sicher zu gewährleisten. Die Rolle ist auf einer verstellbaren Achse gelagert, um an unterschiedliche Dichtungsabmessungen angepaßt werden zu können.

EP-A-0 152 123 offenbart eine Vorrichtung zum kontinuierlichen Einbringen eines Fußes eines länglichen elastischen Streifens in einen Aufnahmeraum, bei der der elastische Streifen mittels einer Rolle in den Aufnahmeraum gedrückt wird und ein Positionierkopf für den Streifen vorgesehen ist, dessen Innenkontur im wesentlichen der Außenkontur des Streifens entspricht und so angeordnet ist, daß die Innenkontur an dem Ausgangsende des Positionierkopfs gegenüber dem Aufnahmeraum für den Streifen um eine Längsachse verdreht ist. Durch die schräge Anordnung und die Verdrehung um die Längsachse wird der Profilfuß des Streifens in den Aufnahmeraum eingebracht, bevor der eigentliche Andrückvorgang erfolgt. Die Druckrolle steht dabei unter Wirkung einer Zugfeder mit feststehender Federkraft.

Der vorliegenden Erfindung liegt die Aufgabe zugrunde, eine Montagevorrichtung der betrachteten Art anzugeben, mit der Dichtungsstreifen zuverlässig und mit vorgegebener Kraft an der vorgesehenen Stelle befestigbar sind. Die Montagevorrichtung soll zudem schnell und einfach zu handhaben sein.

Diese Aufgabe wird erfindungsgemäß durch die Merkmale des Patentanspruchs 1 gelöst.

Vorteilhafte Ausgestaltungen der Erfindung sind in den Unteransprüchen gekennzeichnet.

Bei der erfindungsgemäßen Montagevorrichtung ist ein mit einer Rolle versehener Rollwagen an der Formschablone angebracht und zwischen zwei Anschlägen derart auf der Formschablone geführt, daß die Rolle einen vorgegebenen Bereich des Dichtungsstreifens abfährt. Hierbei wird die Rolle mit einer konstanten Kraft gegen den Dichtungsstreifen angedrückt, die durch eine vorgespannte Feder hervorgerufen wird.

Bei der erfindungsgemäßen Montagevorrichtung ist durch die Formschablone nicht nur sichergestellt, daß der Dichtungsstreifen von Hand exakt an der vorgesehenen Position anbringbar ist, die durch eine überstehende Leiste der Formschablone definiert ist, sondern der Dichtungsstreifen kann schnell und einfach mit einer exakt eingestellten, konstant bleibenden Druckkraft an den Fensterrahmen der Fahrzeugtür angedrückt werden, in dem der an der Formschablone angebrachte Rollwagen auf dieser Formschablone von dem einen Anschlag zu dem anderen Anschlag verschoben wird. Der zweckmäßigerweise auf einem Schienenabschnitt der Formschablone geführte Rollwagen führt dabei seine Rolle nicht nur mit auf den verwendeten Trockenkleber abgestimmter, gleichbleibender Kraft über den Dichtungsstreifen, sondern auch sicher und zuverlässig über dessen gesamten Klebebereich, was mit eine frei gehandhabten Rolleinrichtung nicht gewährbar wäre.

Außerdem ermöglicht es die erfindungsgemäße Montagevorrichtung solche Dichtungsstreifen auf exakte Weise zu befestigen, die nicht auf ihrer ganzen Länge mit einem Kontaktkleber versehen sind, sondern die an den Endbereichen mit einer Zusatzklebemasse, beispielsweise einem mit Plasmabestrahlung aktivierten Einkomponentenkleber versehen werden. Dieser Bereich darf von der Rolle des Rollwagens nicht überrollt werden, was durch entsprechende Positionierung der beiden Anschläge an der Formschablone sichergestellt werden kann.

Weiter wird vorgeschlagen, daß der Rollwagen einen an einem Schienenabschnitt der Formschablone geführten Basiskörper und einen daran verschieblich befestigten Tragarm hat, an dem die drehbare Rolle befestigt ist, und daß zwischen dem Tragarm und dem Basiskörper eine Feder gespannt ist, die beim Einsatz des Rollwagens die Kraft hervorruft, mit der die Rolle an dem Dichtungsstreifen anliegt. Der Tragarm hat dabei zweckmäßigerweise etwa eine C-Form mit einem langen mittigen Steg, der auf dem Basiskörper zwischen beidseitigen Vorsprüngen geführt sein kann, wobei zusätzlich an dem Basiskörper befestigte Stifte in Langlöcher des langen Steges eingreifen können, die den Bewegungsbereich des Tragarms begrenzen. Einer der beiden kurzen Stege des Tragarms dient zweckmäßigerweise zur Halterung der Feder, die sich mit ihrem anderen Ende auf einem Absatz des Basiskörpers abstützt, während der andere kurze Steg die drehbare Rolle trägt.

Mit großem Vorteil wird ferner vorgeschlagen, daß an einem seitlichen Ende des Bewegungsbereichs des Rollwagens eine Einrichtung zu dessen lösbaren Arretieren vorgesehen ist. Diese Einrichtung weist zweckmäßigerweise an dem Schienenabschnitt der Formschablone eine schräge Rampe auf, auf die der Tragarm des Rollwagens, bevorzugt der die Rolle tragende kurze Steg, unter zunehmender Spannung der Feder aufläuft. Die schräge Rampe geht anschließend in einen ebenen Abschnitt über, der sich bis zu dem zugeordneten Anschlag erstreckt. Auf diesem ebenen Abschnitt ist der Rollwagen infolge der durch die beträchtliche Federkraft hervorgerufene Reibungskraft sicher gehalten, so daß die Formschablone gehandhabt, d.h. nach erfolgter Montage des Dichtungsstreifens von der Fahrzeugkarosserie gelöst und an der nächsten Fahrzeugkarosserie befestigt werden kann, ohne daß sich hierbei der Rollwagen in störender Weise entlang der Formschablone bewegt. Durch die unverlierbare Halterung des Rollwagens an der Formschablone ist dieser stets zur Hand.

Weitere Einzelheiten der Erfindung ergeben sich aus der nachfolgenden Beschreibung einer bevorzugten Ausführungsform sowie anhand der Zeichnung. Dabei zeigen:
- Fig. 1: eine Formschablone in einer Seitenansicht;
- Fig. 2: eine perspektivische Ansicht der Formschablone gemäß Fig. 1, schräg von rechts betrachtet und
- Fig. 3: eine teilweise geschnittene Seitenansicht des Rollwagens der Montagevorrichtung.

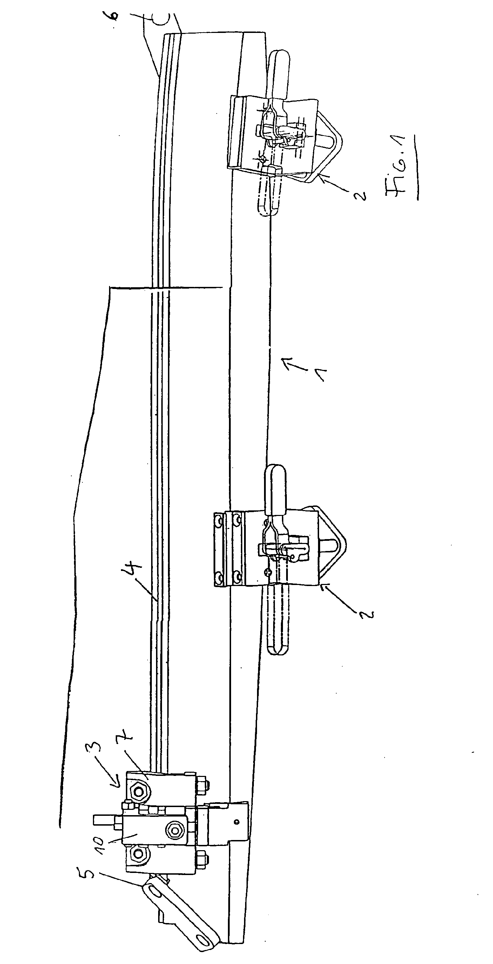

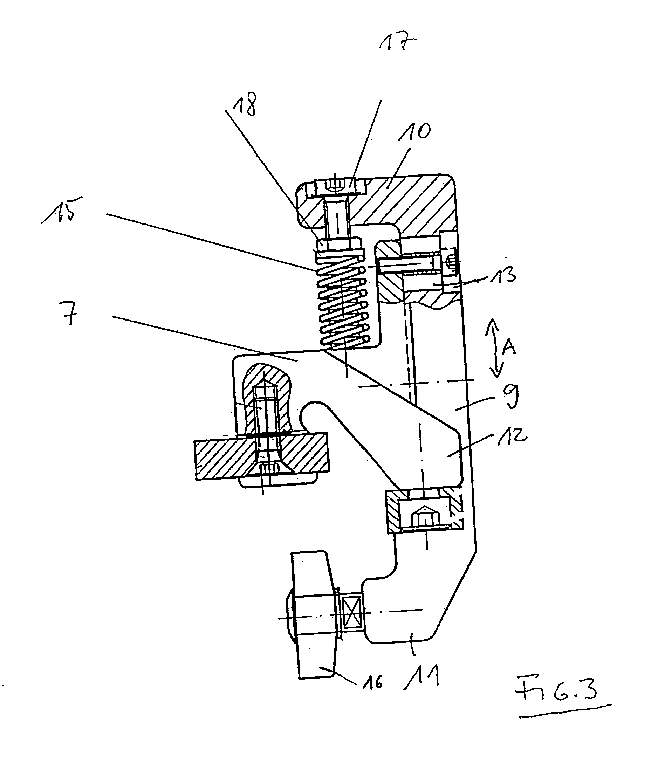

Fig. 1 zeigt eine Formschablone 1, die mit zwei Klemmeinrichtungen 2 versehen ist, mit der sie an einer Fahrzeugkarosserie im vorderen Fensterbereich einer Fahrzeugtür lösbar befestigtbar ist, um dort eine Türzusatzdichtung in exakter Positionierung befestigen zu können. An der Formschablone 1 ist ein Rollwagen 3 angebracht, der auf einem Schienenabschnitt 4 der Formschablone 1 zwischen zwei Anschlägen 5, 6 verschiebar ist. Der Rollwagen 3 ist in Fig. 1 in einer Rückansicht zu sehen, die in Fig. 3 einer Ansicht von links und bei der in Fig. 3 dargestellten abgewandelten Ausführungsform eines Rollwagens einer Ansicht von oben entspricht.

Der Rollwagen 3 enthält einen Basiskörper 7, der auf dem Schienenabschnitt 4 der Formschablone 1 sitzt und auf diesem verschieblich geführt ist, und einen an dem Basisabschnitt 7 in Richtung eines Pfeils A verschieblich gehaltenen Tragarm 8. Der Tragarm 8 hat einen langgestreckten Mittelsteg 9 und an dessen Enden zwei kurze, rechtwinklig abstehende Stege 10 und 11.

Der Mittelsteg 9 sitzt zwischen zwei seitlichen Vorsprüngen 12 des Basiskörpers 7, und er enthält wenigstens ein Langloch 13, in das ein Stift 14 eingreift, der in dem Basiskörper 7 befestigt ist.

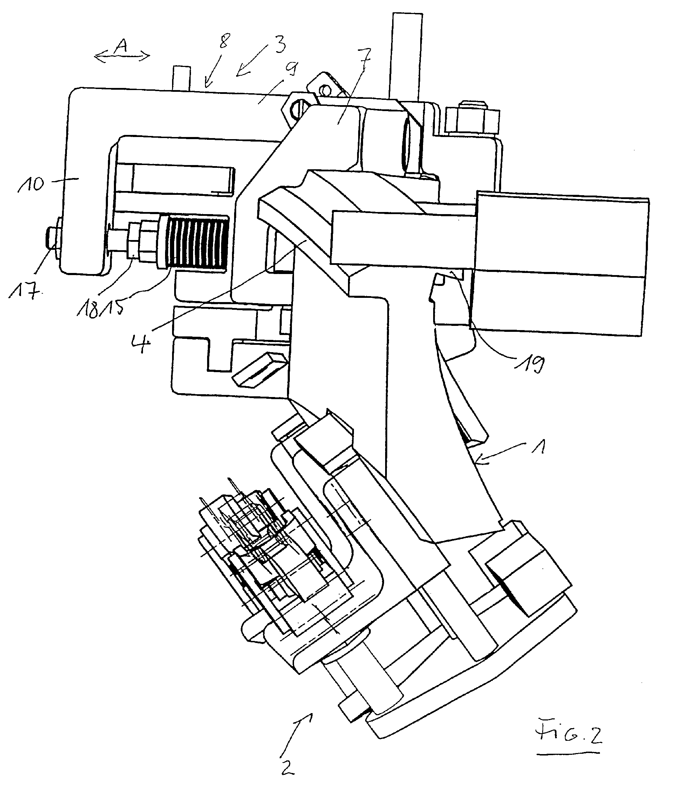

Der kurze Steg 10 dient als Federsitz einer Druckfeder 15, die sich mit ihrem anderen Ende auf einem Absatz des Basiskörpers 7 abstützt und den Haltearm 8 in Fig. 3 nach oben bzw. in Fig. 2 nach links drückt.

An dem in Fig. 3 unteren kurzen Steg 11 des Haltearms 8 ist eine drehbare Rolle 16 gelagert, die einen nicht dargestellten Dichtungsstreifen mit einer durch die Feder 15 vorgegebenen Kraft an die Fahrzeugkarosserie anpreßt. Die Kraft der Feder 15 ist einstellbar, wozu der Steg 10 von einer Schraube 17 durchgriffen ist, deren Mutter 18 den eigentlichen Federsitz bildet.

Fig. 2 läßt einen vorstehenden Leistenabschnitt 19 erkennen, der in der Montagestellung der Formschablone 1 den Karosserierahmen übergreift und einen Anschlag zum Anbringen eines Dichtungsstreifens an der Karosserie bildet. Der an der Karosserie anhaftende Dichtungsstreifen wird anschließend von dem Rollwagen 3 über eine durch Anschläge vorgegebene Strecke abgerollt, wobei die Rolle 16 mit einer gleichbleibenden Kraft den mit Trockenkleber versehenen Dichtungsstreifen anpreßt.

Die Formschablone hat an einem Endbereich des Schienenabschnitts 4 eine lösbare Arretierungseinrichtung für den Rollwagen 3.

## Patentansprüche

1. Montagevorrichtung für einen an einer Fahrzeugkarosserie zu befestigenden Dichtungsstreifen, mit einer Formschablone (1), die lösbar an der Karosserie festklemmbar ist, und mit einem mit einer Rolle (16) versehenen Rollwagen (3), der an der Formschablone (1) angebracht und derart an dieser geführt ist, daß die Rolle (16) einen vorgegebenen Bereich des Dichtungsstreifens abfährt,
**dadurch gekennzeichnet,**
**daß** die Rolle (16) von einer Feder (15) mit einstellbarer Federkraft gegen den Dichtungsstreifen angedrückt wird, und daß der vorgegebene Bereich des Dichtungsstreifens durch zwei Anschläge (5,6) begrenzt ist.

2. Montagevorrichtung nach Anspruch 1,
**dadurch gekennzeichnet,**
**daß** die Kraft der Feder (15) durch einen verstellbaren Federsitz einstellbar ist.

3. Montagevorrichtung nach Anspruch 1 oder 2,
**dadurch gekennzeichnet,**
**daß** der Rollwagen (3) einen an einem Schienenabschnitt (4) der Formschablone (1) geführten Basiskörper (7) und einen daran verschieblich befestigten mit der Rolle (16) versehenen Tragarm (8) aufweist, wobei zwischen dem Tragarm (8) und dem Basiskörper (7) die Feder (15) gespannt ist.

4. Montagevorrichtung nach Anspruch 3,
**dadurch gekennzeichnet,**
**daß** der Tragarm (8) im wesentlichen eine C-Form hat.

5. Montagevorrichtung nach einem der Ansprüche 1 bis 4,
**dadurch gekennzeichnet,**
**daß** an einem seitlichen Endbereich des Bewegungsbereichs des Rollwagens (3) eine Einrichtung zum lösbaren Arretieren des Rollwagens (3) vorgesehen ist.

6. Montagevorrichtung nach Anspruch 5,
**dadurch gekennzeichnet,**
**daß** die Arretierungseinrichtung eine schräge Rampe aufweist, auf die der Tragarm (8) unter zunehmender Spannung der Feder (15) aufläuft.

## Claims

1. A mounting device for a sealing strip to be fastened to an automotive body, comprising a shape template (1) which can be detachably clamped onto the automotive body, and a rolling carriage (3) which is provided with a roller (16) and which is mounted and guided on the shape template (1) such that the roller (16) travels over a predetermined area of the sealing strip,
**characterized in**
**that** the roller (16) is pressed by a spring (15) with an adjustable spring force against the sealing strip, and that the predetermined area of the sealing strip is defined by two stops (5, 6).

2. The mounting device according to claim 1,
**characterized in**
**that** the force of the spring (15) is adjustable through an adjustable spring seat.

3. The mounting device according to claim 1 or 2,
**characterized in**
**that** the rolling carriage (3) comprises a basic body (7) guided on a rail section (4) of the shape template (1) and a support arm (8) which is displaceably fixed thereto and provided with the roller (16), the spring (15) being loaded between the support arm (8) and the basic body (7).

4. The mounting device according to claim 3,
**characterized in**
**that** the support arm (8) has substantially a C-shape.

5. The mounting device according to any one of claims 1 to 4,
**characterized in**
a device for detachably locking the rolling carriage (3) is provided on a lateral end portion of the movement area of the rolling carriage (3).

6. The mounting device according to claim 5,
**characterized in**
**that** the locking device includes an inclined ramp onto which the support arm (8) abuts with increasing tension of the spring (15).

## Revendications

1. Dispositif de montage pour une bande d'étanchéité à fixer à une carrosserie du véhicule, avec un gabarit de forme (1) qui peut être fixé amoviblement à la carrosserie, et avec un chariot roulant (3) muni d'un rouleau (16) qui est appliqué au gabarit de forme (1) et est guidé de telle sorte à celui-ci que le rouleau (16) passe sur une zone prédéfinie de la bande d'étanchéité,
**caractérisé en ce que** le rouleau (16) est appliqué par un ressort (15) avec une force de ressort réglable à la bande d'étanchéité, et **en ce que** la zone prédéterminée de la bande d'étanchéité est délimitée par deux butées (5, 6).

2. Dispositif de montage selon la revendication 1,
**caractérisé en ce que** la force du ressort (15) est réglable par un siège de ressort ajustable.

3. Dispositif de montage selon la revendication 1 ou 2,
**caractérisé en ce que** le chariot roulant (3) présente un corps de base (7) guidé à une section de rail (4) du gabarit de forme (1) et un bras de support (8) fixé d'une manière déplaçable à celui-ci, muni du rouleau (16), le ressort (15) étant tendu entre le bras de support (8) et le corps de base (7).

4. Dispositif de montage selon la revendication 3,
**caractérisé en ce que** le bras de support (8) a sensiblement une forme en C.

5. Dispositif de montage selon l'une des revendications 1 à 4, **caractérisé en ce qu'**il est prévu, à une zone d'extrémité latérale de la zone de déplacement du chariot roulant (3), une installation pour arrêter relachâblement le chariot roulant (3).

6. Dispositif de montage selon la revendication 5,
**caractérisé en ce que** l'installation d'arrêtage présente une rampe inclinée sur laquelle monte le bras de support (8) sous une tension croissante du ressort (15).
